# EUROPÄISCHE PATENTSCHRIFT

(11) **EP 0 544 067 B1**
(45) Veröffentlichungstag und Bekanntmachung des Hinweises auf die Patenterteilung: **12.07.1995**
(21) Anmeldenummer: 92115023.1
(22) Anmeldetag: 03.09.1992
(51) Int. Cl.: B60P 3/025, B60P 3/34, E04H 15/08

(54) **Fahrbarer Stand mit Kastenaufbau**
Mobile unit with body
Stand mobile avec caisse

(30) Priorität: 26.10.1991 DE 4135340
(43) Veröffentlichungstag der Anmeldung: 02.06.1993
(73) Patentinhaber: Ewers, Franz, D-59872 Meschede (DE)
(72) Erfinder: Ewers, Franz, D-59872 Meschede (DE)
(74) Vertreter: Fritz, Edmund Lothar, Dipl.-Chem.

(56) Entgegenhaltungen:
- DE-A- 2 850 359
- FR-A- 1 079 624
- FR-A- 1 304 188
- FR-A- 1 399 785
- US-A- 2 358 446
- US-A- 3 952 758
- US-A- 4 191 418

## Beschreibung

Ein bekannter fahrbarer Stand mit Kastenaufbau (DE-A-32 26 048) hat die Form eines Verkaufspavillons. Im Gebrauchszustand ist ein feststehender Dachbereich durch seitlich vorstehende Teildächer vergrößert. Weiterhin ist aus FR-A-1 399 785 eine fahrbarer Stand mit Kastenaufbau bekannt, mit den Merkmalen des Oberbegriffes von Anspruch 1.

Der Erfindung liegt die Aufgabe zugrunde, durch zusätzliche Zeltanbauten an beiden Längsseiten und an der Rückseite einen bei weitem größeren überdachten Raum zu schaffen, als es bei dem vorgenannten Stand der Technik der Fall ist. Dabei soll der Kastenaufbau sämtliche dazu erforderliche Bauelemente mit sich führen.

Diese Aufgabe wird durch die Merkmale nach dem kennzeichen des Patentanspruchs gelöst.

Nach Aufstellung des fahrbaren Standes kann die Montage der Zeltkonstruktion beginnen. Zunächst wird das bewegliche Dachteil an der Rückseite ausgefahren und abgestützt, so daß dadurch die geschlossene Dachfläche etwa verdoppelt wird. Alsdann können über die gesamte Länge in Querrichtung die Sparren und die damit verbundenen Stützen aufgestellt werden, wobei die Möglichkeit besteht, die Enden der Sparren in Spezialprofile der Dachteile einzustecken ohne das Werkzeuge benötigt werden. Die gesamte Tragkonstruktion für das Zeltdach wird in an sich bekannter Weise durch Querverbände und Windverbände ausgesteift. Dann erfolgt die Abdeckung der Tragkonstruktion an jeder Seite durch zwei Planen, die von Rollen am feststehenden Dach und am ausgefahrenen Dach abgerollt und mit ihrem Rand, je nach Bedarf, entweder oben an der Traufe der Tragkonstruktion oder bodenseitig befestigt werden.

Durch die Zeltanbauten wird eine dreiseitige umlaufende Kommunikation der Besucher unter Dach erreicht, was bei bisher bekannten Systemen mit seitlichen oder hinteren Zeltanbauten nicht möglich ist.

Es kann dabei eine Überdachung von circa 160 qm erreicht werden bei einer Grundfläche des Standes von 6 x 2,5 Meter. Die Einzelteile wie die Sparren und Stützen können in einem Lastraum des feststehenden Daches untergebracht werden, wobei jeweils eine Säule und eine Stütze an einer gelenkigen Verbindung zusammengeklappt werden können. Die Teile sind in dem Lastraum des Daches gegen Witterungseinflüsse geschützt. Der Stand ist im übrigen auch ohne Zeltdach voll funktionsfähig. Die Aufstellung des Zeltdaches kann mit zwei bis drei fachmännischen Personen in circa einer Stunde erfolgen. Bei einer Großveranstaltung können circa 320 Menschen darunter Platz finden. Für den Aufbau sind im wesentlichen keine Werkzeuge erforderlich. Für das Ausfahren des beweglichen Dachteiles können Kettenzüge vorgesehen sein, mit Kurbeltrieb, wahlweise mit Elektroantrieb. Bei den Bodenstützen ist eine stufenlose Einstellung vorgesehen.

Bei Einsatz des Zeltdach-Bausatzes eignet sich ein fahrbarer Stand nach der Erfindung als Festplatz-Verkaufsstand, als Messestand oder für politische oder religiöse Veranstaltungen, Sportfeste und dergleichen.

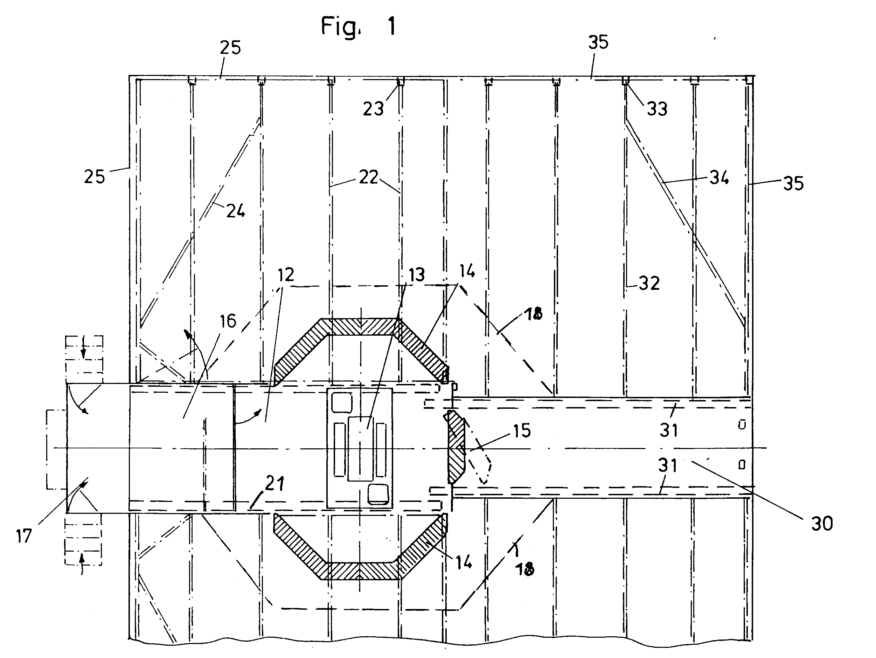

Im folgenden wird ein Ausführungsbeispiel der Erfindung beschrieben unter Bezugnahme auf die beiliegenden Zeichnungen
- Fig. 1: ist eine Draufsicht, auf den funktionsfähig montierten Stand nach der Erfindung mit Zelterweiterung;
- Fig. 2: ist eine Ansicht von einer Längsseite;
- Fig. 3: stellt eine Ansicht bzw. ein Schnitt von einer Stirnseite dar.

Der Stand hat einen Kastenaufbau 10, wie an sich bekannt, auf einem Fahrgestell 11 mit Deichsel. Im Kastenaufbau ist ein Aufenthaltsraum 12. Die beiden Längswände 18 des Aufenthaltsraumes werden als kleines Regendach hochgeklappt, die eingeklappten Boden-Erweiterungsteile mit Thekenplatten um 90° nach unten geklappt. An der Rückseite ist eine Tür 15 vorgesehen. Vor dem Aufenthaltsraum befindet sich ein Getränkeraum 16. Am Kasten vorne ist eine Toilette 17 angebaut.

Der Kasten ist oben durch ein festes Dach 20 abgeschlossen. Ab Dachrand ist jeweils eine Rolle 21 gelagert, auf der eine Zeltplane aufgewickelt ist.

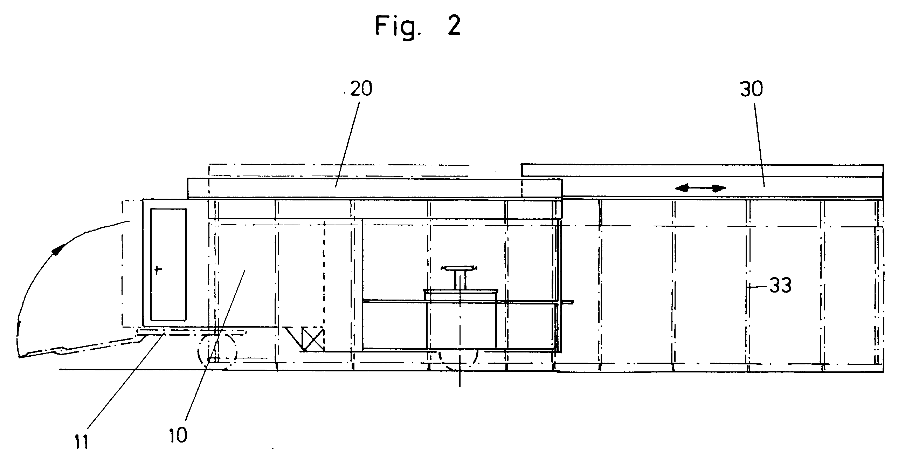

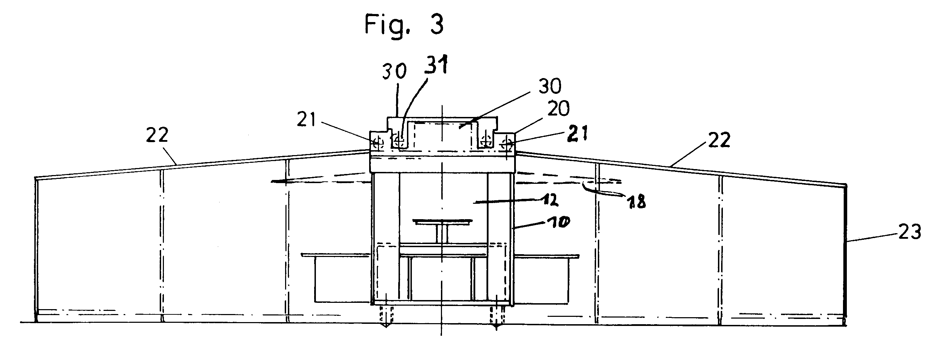

Das feste Dach 20 nimmt ein ausfahrbares Dach 30 auf, das etwa die gleiche Breite wie das feste Dach hat und, wie Figur 2 und 3 zeigen, etwa auf die gleiche Länge wie das feste Dach nach hinten ausgezogen und durch Stützen 33 abgestützt werden kann. Auch im ausfahrbaren Dach ist jeweils randseitig eine Rolle 31 gelagert mit einer aufgewickelten Zeltplane. Bei ausgefahrenem Dach 30 überlappen sich die Rollen 21 und 31 ein Stück.

Über die gesamte Länge des Standes mit ausgefahrenem Dach 30 können an jeder Längsseite Dachsparren 22, 32 aufgestellt werden, die jeweils durch Stützen 23 abgestützt sind. Jede Stütze ist mit dem zugehörigen Dachsparren gelenkig verbunden, so daß zum Stauen die beiden Teile zusammengeklappt werden können. Die Dachsparren werden jeweils mittels einer Steckverbindung an einem längsseitigen Stab des festen Daches bzw. des ausfahrbaren Daches 30 verbunden. Die gesamte Tragkonstruktion der Sparren und Stützen wird durch Windverbände 24 und durch Querverbände augesteift. Die Stützen haben unten eine stufenlose Verstellmöglichkeit um Boden-Unebenheiten auszugleichen.

Wenn an jeder Seite die Tragkonstruktion aufgestellt ist, kann jeweils die Zeltplane 25 bzw. 35 ausgezogen und an der Tragkonstruktion befestigt werden, entweder bis zu der Trauflinie der Tragkonstruktion oder bis zum Boden, wenn auch die längsseitigen Flächen der Tragkonstruktion dicht gemacht werden soll. Das abschließend der stirnseitigen Flächen der Tragkonstruktion erfolgt durch zusätzliche Planen.

## Patentansprüche

1. Fahrbarer Stand mit Kastenaufbau, der einen Aufenthaltsraum mit zu öffnenden Seitenwänden umfaßt, mit den Merkmalen:
- ein feststehendes Dach (20) nimmt ein weiteres Dach (30) auf, etwa von der gleichen Breite, das nach hinten etwa über Dachlänge ausfahrbar und mit Stützen abstützbar ist,
gekennzeichent durch die nachfolgend genannten weiteren Merkmale
- für den Aufbau einer Tragkonstruktion zu beiden Seiten des verlängerten Daches sind Dachsparren (22, 32) mit angelenkten Stützen (23, 33) vorgesehen, die an jeder Seite des gesamten Daches an ein Spezialprofil ansteckbar sind, wobei die Gesamtheit der Sparren und Stützen durch Querverbände und Windverbände (24, 34) ausgesteift werden kann.
- an jeder Seite des festen und des ausfahrbaren Daches ist eine Rolle (21, 31) gelagert mit einer abrollbaren Zeltplane (25, 35) zur Abdeckung der Tragkonstruktion.

## Claims

1. Mobile stand with box-type body comprising a lounge with side walls capable to be opened, having the features:
- a stationary roof (20) accommodates a further roof (30) having approximately the same width and which is extensible towards the rear approximately about the length of the roof and is supportable by means of posts,
characterised by the further features mentioned below
- for the erection of a supporting structure on both sides of the elongated roof there are provided rafters (22, 32) with articulated posts (23, 33) which can be attached on each side of the whole roof to a special section, the entire rafters and posts being able to be reinforced by means of transversal bracings and lateral wind bracings (24, 34),
- at each side of the stationary and of the extensible roof there is mounted a roller (21, 31) with an unrollable tent awning (25, 35) for covering the supporting structure.

## Revendications

1. Stand mobile avec une caisse qui comprend un séjour avec des parois latérales qui peut être ouvertes, avec les caractéristiques:
- un toit fixe (20) loge un autre toit (30) avec environ la même largeur qui est extensible en arrière environ par la longueur du toit et qui peut être étayé par des supports,
caractérisé par les autres caractéristiques suivantes
- pour le montage d'une construction portante aux deux côtés du toit extensible il y a des chevrons (22, 32) avec des supports articulés (23, 33) qui peut être attacher à chaque côté du toit entier à un profilé spécial, l'ensemble des chevrons et des supports pouvant être renforcé au moins des entretoisements transversaux et des contreventements (24, 34),
- à chaque côté du toit fixe et du toit extensible un rouleau (21, 31) est monté comprenant une toile de tente (25, 35) pour couvrir la construction portante.
